# EUROPEAN PATENT SPECIFICATION

(11) **EP 3 528 517 B1**
(45) Date of publication and mention of the grant of the patent: **27.12.2023**
(21) Application number: 16920838.6
(22) Date of filing: 04.11.2016
(51) Int. Cl.: H04W 76/12, H04W 88/16, H04W 92/24, H04W 28/10

(54) **DATA PACKET PROCESSING METHOD, CONTROL PLANE NETWORK ELEMENT AND USER PLANE NETWORK ELEMENT**
DATENPAKETVERARBEITUNGSVERFAHREN, STEUEREBENENNETZELEMENT UND BENUTZEREBENENNETZELEMENT
PROCÉDÉ DE TRAITEMENT DE PAQUETS DE DONNÉES, ÉLÉMENT DE RÉSEAU DE PLAN DE COMMANDE ET ÉLÉMENT DE RÉSEAU DE PLAN D'UTILISATEUR

(43) Date of publication of application: 21.08.2019
(73) Proprietor: Huawei Technologies Co., Ltd., Longgang District Shenzhen, Guangdong 518129 (CN)
(72) Inventor: ZHOU, Runze, Shenzhen Guangdong 518129 (CN); NIE, Shengxian, Shenzhen Guangdong 518129 (CN); CHEN, Zhongping, Shenzhen Guangdong 518129 (CN)
(74) Representative: Epping - Hermann - Fischer
(86) International application number: PCT/CN2016/104786
(87) International publication number: WO 2018/082070

(56) References cited:
- WO-A1-2014/101062
- CN-A- 101 730 075
- CN-A- 102 316 521
- CN-A- 102 421 071
- "3rd Generation Partnership Project; Technical Specification Group Core Network and Terminals; Interface between the Control Plane and the User Plane of EPC Nodes; Stage 3 (Release 14)", 3GPP STANDARD; 3GPP TS 29.244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V0.2.0, 27 October 2016 (2016-10-27), pages 1-26, XP051173172, [retrieved on 2016-10-27] & "3rd Generation Partnership Project; Technical Specification Group Services and System Aspects; Architecture enhancements for control and user plane separation of EPC nodes; Stage 2 (Release 14)", 3GPP STANDARD; 3GPP TS 23.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.0, 14 September 2016 (2016-09-14), pages 1-66, XP0
- "3rd Generation Partnership Project; Technical Specification Group Services and System Aspects; Architecture enhancements for control and user plane separation of EPC nodes; Stage 2 (Release 14)", 3GPP STANDARD; 3GPP TS 23.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.0, 14 September 2016 (2016-09-14), pages 1-66, XP051172439, [retrieved on 2016-09-14]
- "3rd Generation Partnership Project; Technical Specification Group Services and System Aspects; Study on control and user plane separation of EPC nodes (Release 14)", 3GPP STANDARD ; TECHNICAL REPORT ; 3GPP TR 23.714, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 22 June 2016 (2016-06-22), pages 1-87, XP051295181, [retrieved on 2016-06-22]
- NOKIA: "Packet Forwarding Model for CUPS", 3GPP DRAFT; C4-165071, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 October 2016 (2016-10-17), XP051146337, Retrieved from the Internet: URL:http://www.3gpp.org/ftp/Meetings_3GPP_ SYNC/CT4/Docs/ [retrieved on 2016-10-17]

## Description

### TECHNICAL FIELD

The present invention relates to the field of communications technologies, and in particular, to data packet processing methods, a control plane network element, and a data packet processing system.

### BACKGROUND

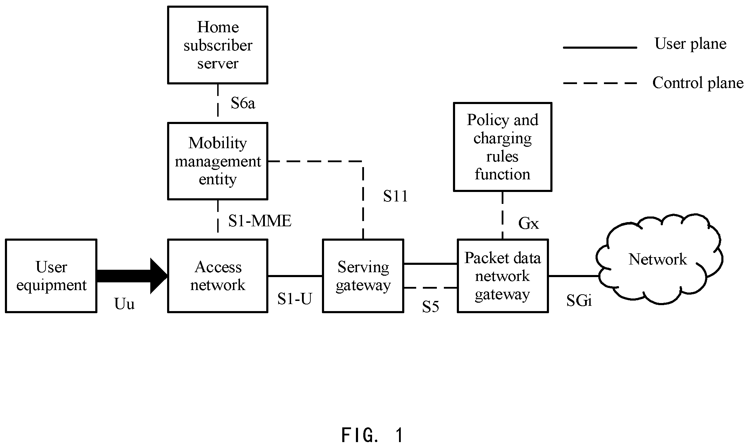

In telecommunication networks, currently a most widely applied network architecture diagram is a network architectural diagram of a 4th generation telecommunication network defined by 3rd Generation Partnership Project (3rd Generation Partnership Project, 3GPP). The network architectural diagram is shown in FIG. 1, and mainly includes an access network and an evolved packet core (Evolved Packet Core, EPC) core network. Gateways in the EPC core network include a serving gateway (Serving Gateway, SGW) and a packet data network gateway (Packet Data Network Gateway, PGW). Usually SGWs are centrally deployed in an equipment room of an operator. The SGW transmits both user plane data and control plane signaling. The PGW manages a connection between user equipment (User Equipment, UE) and an external packet data network, performs policy implementation, and performs packet filtering, charging support, lawful interception, and packet screening for each user equipment. The EPC core network further includes network elements such as a mobility management entity (Mobility Management Entity, MME) and a home subscriber server (Home Subscriber Server, HSS).

Control plane channels shown by dashed lines and user plane channels shown by solid lines are included in FIG. 1. The user plane channel is established based on a service request of the UE. When the core network receives the service request sent by the UE, the MME instructs the SGW and the PGW to establish a corresponding packet data network (Packet Data Network, PDN) connection, namely, establish a default bearer (an S1-U interface, an S5 interface, or an SGi interface). Then uplink and downlink packets of the UE may be transmitted on a user plane channel corresponding to the default bearer.

A control plane and a user plane of a network element of the EPC core network shown in FIG. 1 are not separated. As a quantity of packets forwarded in the EPC core network continuously increases, a capacity of the SGW becomes a bottleneck that limits transmission rate improvement in the core network. Centralized deployment of the SGW makes networking inflexible and scalability poor, and cannot adapt to development of a future service. Therefore, a research project of separating the control plane from the user plane the an EPC core network is determined in 3GPP, to separate control plane functions from user plane functions of core network elements such as the SGW, the PGW, and a Traffic Detection Function (Traffic Detection Function, TDF) network element (an optional network element device in the core network, and not shown in FIG. 1).

A connection relationship between an SGW control plane network element and an SGW user plane network element may be a one-to-one connection relationship (in other words, one SGW control plane network element is connected to one SGW user plane network element), or a one-to-multiple connection relationship (in other words, one SGW control plane network element is connected to a plurality of SGW user plane network elements), or a multiple-to-multiple connection relationship. The SGW control plane network element and the SGW user plane network element may be flexibly deployed depending on different service scenarios. For example, in an urban area of intensive users, the SGW user plane network element may be deployed on a cell side close to the access network; and in a suburban area of sparse users, SGW user plane network elements may be centered in an area center (a central area of suburban users). In addition, SGW control plane network elements may still be centrally deployed in an equipment room of an operator, so as to interact with another control plane network element (the MME, the HSS, and the like) of the core network in the equipment room, or may be deployed on an access network side based on a requirement.

In a network architecture in which the control plane function and the user plane function are separated, the control plane function is responsible for data packet buffering of a user, and the user plane function is responsible for transmission of a buffered data packet. Based on the network architecture, when the service request sent by the UE is received, a user plane channel between the SGW user plane network element and the access network, a user plane channel between the SGW user plane network element and a PGW user plane network element, a user plane channel between the PGW user plane network element and a network may be established. However, regardless of whether there is a service request, no user plane channel between a user plane network element and a control plane network element is established. This is disadvantageous to data packet transmission between the user plane network element and the control plane network element.

"3rd Generation Partnership Project; Technical Specification Group Core Network and Terminals; Interface between the Control Plane and the UserPlane of EPC Nodes; Stage3 (Release 14)", 3GPP STANDARD; 3GPP TS 29.244, 27 October 2016, XP05117317, describes the CP function controls the packet processing in the UP function by establishing, modifying or terminating Sx Session contexts and by configuring (i.e. adding, modifying or deleting) PDRs, FARs, QERs and/or URRs per Sx session context.

"3rd Generation Partnership Project; Technical Specification Group Services and System Aspects; Architecture enhancements for control and user plane separation of EPC nodes; Stage2 (Release 14)", 3GPP STANDARD; 3GPP TS 23.214, 14 September 2016, XP05117243, describes when the UE moves to ECM-IDLE state, if the SGW-C decides to activate buffering, it shall inform the SGW-U to stop sending data packets to eNodeB and start forwarding the downlink data packets towards the SGW-C. When the UE transition to the ECM-CONNECTED state, the SGW-C shall update the SGW-U via Sxa interface with the F-TEIDu of the eNodeB. If there are buffered packets available and their buffering duration has not expired, the SGW-C shall forward those packets to the SGW-U outside of the control plane signalling (see clause 5.6.3 "Format of forwarded user plane data") to relay them to the UE. These packets are then forwarded by the SGW-U to the eNodeB.

### SUMMARY

The present invention is defined by the set of appended claims. In the following, parts of the description and drawing referring to implementations, which are not covered by the claims are not presented as embodiments of the invention, but as illustrative examples useful for understanding the invention. Implementations of the present disclosure provide a data packet processing method, a control plane network element, and a user plane network element, to implement establishment of a user plane channel between the user plane network element and the control plane network element, and facilitate data packet transmission between the user plane network element and the control plane network element.

In the implementations of the present disclosure, the control plane network element sends the first request message to the user plane network element to establish the first user plane channel between the control plane network element and the user plane network element, so that the control plane network element receives, via the first user plane channel, the first data packet sent by the user plane network element, so as to implement establishment of a user plane channel between the user plane network element and the control plane network element, and facilitate data packet transmission between the user plane network element and the control plane network element.

### BRIEF DESCRIPTION OF DRAWINGS

To describe the technical solutions in the implementations of the present disclosure or in the prior art more clearly, the following briefly describes the accompanying drawings required for describing the implementations. Apparently, the accompanying drawings in the following description show merely some implementations of the present disclosure, and a person of ordinary skill in the art may still derive other drawings from these accompanying drawings without creative efforts.
FIG. 1 is a network architectural diagram of a 4th generation telecommunication network;
FIG. 2 is a diagram of a network architecture according to an implementation of the present disclosure;
FIG. 3 is a schematic communication diagram of a data packet processing method according to an implementation of the present disclosure;
FIG. 4 is a schematic communication diagram of another data packet processing method according to an implementation of the present disclosure;
FIG. 5 is a schematic communication diagram of still another data packet processing method according to an implementation of the present disclosure;
FIG. 6A is a schematic structural diagram of a control plane network element according to an implementation of the present disclosure;
FIG. 6B is a schematic structural diagram of another control plane network element according to an implementation of the present disclosure;
FIG. 7A is a schematic structural diagram of a user plane network element according to an implementation of the present disclosure; and
FIG. 7B is a schematic structural diagram of another user plane network element according to an implementation of the present disclosure.

### DESCRIPTION OF IMPLEMENTATIONS

To make the purpose, technical solutions, and advantages of the implementations of the present disclosure clearer, the following describes the technical solutions of the implementations of the present disclosure with reference to the accompanying drawings in the implementations of the present disclosure.

In the specification, claims, and accompanying drawings, the terms "first", "second", "third", "fourth", and so on (if existent) are intended to distinguish between similar parts but do not necessarily indicate a specific order or sequence. It should be understood that the terms used in such a way are interchangeable in proper circumstances so that the implementations of this application described herein can be implemented in other orders than the order illustrated herein.

Network architectures and service scenarios described in the implementations of the present disclosure aim to more clearly describe the technical solutions in the implementations of the present disclosure, but are not intended to limit the technical solutions provided in the implementations of the present disclosure. A person of ordinary skill in the art may know that as the network architectures evolve and a new service scenario emerges, the technical solutions provided in the implementations of the present disclosure is also applicable to a similar technical problem.

As shown in FIG. 1, FIG. 1 is a network architectural diagram of a 4th generation telecommunication network defined by 3GPP, and user equipment, an access network, an EPC core network, and a network are included in FIG. 1. The access network may include at least one base station. The base station may be a base station in a 2nd generation (2nd Generation, 2G) mobile communications system or a 3rd generation (3rd Generation, 3G) mobile communications system, or may be an evolved NodeB (evolved NodeB, eNB) in a 4th generation mobile communications system, or may be even a base station in a 5th generation mobile communications system. The EPC core network includes a mobility management entity, a home subscriber server, a serving gateway, a packet data network gateway, and a policy and charging rules function (Policy and Charging Rules Function, PCRF). In actual application, the EPC core network further includes another network element that is not shown in FIG. 1.

The MME provides primary control in a Long Term Evolution (Long Term Evolution, LTE) access network, and mobility management in the core network, including paging, security control, bearer control in the core network, mobility control of the UE in an idle mode, and the like.

The SGW is responsible for user plane data transmission and forwarding, route switching, and the like of the UE. Other functions are further included: switching overshoot; data forwarding; classified identification of uplink and downlink transport layer packets; downlink packet buffering in a process of triggering initial bearer establishment in the network; implementing uplink and downlink charging based on UE, PDN, and quality of service class identifier (QoS Class Identifier, QCI) granularities during roaming; packet routing and forwarding; lawful interception, and the like.

The PGW manages a connection between the UE and an external packet data network. One UE may be synchronously connected to a plurality of PGINs that access a plurality of PDNs. The PGW performs policy implementation, and performs packet filtering, charging support, lawful interception, and packet screening for each user.

A communication process based on the network architecture shown in FIG. 1 is as follows: The user equipment UE is connected to the EPC core network by using the access network; a control plane is connected to the MME by using an S1-MME interface, performs user registration and authorization, and determines user validity in the HSS; the MME sends a default bearer message to the SGW by using an S11 interface; the SGW obtains, through parsing, a carried PGW in a domain name system (Domain Name System, DNS) by using an access point name (Access Point Name, APN); the SGW sends the message to the PGW by using an S5 interface; the PGW is connected to the PCRF by using a Gx interface, and performs user request authorization, policy allocation, and a quality of service (Quality of Service, QoS) guarantee; a user plane is connected to the SGW by using an S1-U interface; the SGW is connected to the PGW by using the S5 interface; and the PGW accesses the network by using an SGi interface. In FIG. 1, a dashed line indicates a control plane connection channel that is used to transmit signaling, an instruction, a broadcast message, and the like; and a solid line indicates a user plane connection channel that is used to transmit data, a data packet, a packet, and the like.

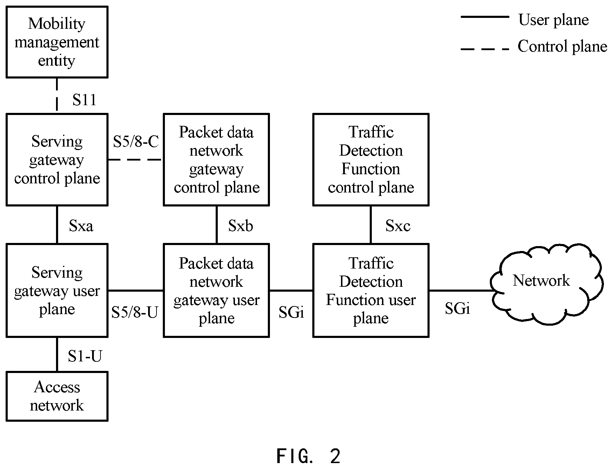

A control plane and a user plane of a network element of the EPC core network shown in FIG. 1 are not separated. As a quantity of packets forwarded in the EPC core network continuously increases, a capacity of the SGW becomes a bottleneck that limits transmission rate improvement in the core network. Centralized deployment of the SGW makes networking inflexible and scalability poor, and cannot adapt to development of a future service. Therefore, a research project of separating the control plane from the user plane in the EPC core network is determined in 3GPP, to separate control plane functions from user plane functions of core network elements such as the SGW, the PGW, and a Traffic Detection Function (Traffic Detection Function, TDF) network element (an optional network element device in the core network, and not shown in FIG. 1). Referring to FIG. 2, FIG. 2 is a diagram of a network architecture according to an implementation of the present disclosure. In FIG. 2, control plane functions of an SGW, a PGW, and a TDF are separated from user plane functions of the SGW, the PGW, and the TDF, and an SGW control plane network element, an SGW user plane network element, a PGW control plane network element, a PGW user plane network element, a TDF control plane network element, and a TDF user plane network element are separately obtained. FIG. 2 shows only network elements and interfaces in this implementation of the present disclosure. In actual application, another network element and an interface connected with the another network element are further included. The network architectural diagram shown in FIG. 2 does not constitute a limitation on this implementation of the present disclosure.

A connection relationship between the SGW control plane network element and the SGW user plane network element may be a one-to-one connection relationship (in other words, one SGW control plane network element is connected to one SGW user plane network element), or a one-to-multiple connection relationship (in other words, one SGW control plane network element is connected to a plurality of SGW user plane network elements), or a multiple-to-multiple connection relationship. The SGW control plane network element and the SGW user plane network element may be flexibly deployed depending on different service scenarios. For example, in an urban area of intensive users, the SGW user plane network element may be deployed on a cell side close to the access network; and in a suburban area of sparse users, SGW user plane network elements may be centered in an area center (a central area of suburban users). In addition, SGW control plane network elements may still be centrally deployed in an equipment room of an operator, so as to interact with another control plane network element (the MME, the HSS, and the like) of the core network in the equipment room, or may be deployed on an access network side based on a requirement.

Based on the network architecture shown in FIG. 2, the SGW control plane network element is responsible for data packet buffering of a user, and the SGW user plane network element is responsible for forwarding a buffered data packet. Based on the network architecture, when a service request sent by the UE is received, a user plane channel between the SGW user plane network element and the access network, a user plane channel between the SGW user plane network element and the PGW user plane network element, a user plane channel between the PGW user plane network element and the TDF user plane network element, and a user plane channel between the TDF user plane network element and the network may be established. However, regardless of whether there is a service request, no user plane channel between a user plane network element and a control plane network element is established. In other words, no user plane channel corresponding to an Sxa interface, an Sxb interface, or an Sxc interface is established. This is disadvantageous to data packet transmission between the user plane network element and the control plane network element.

In view of this, the implementations of the present disclosure provide a data packet processing method, a control plane network element, and a user plane network element, to implement establishment of a user plane channel between the user plane network element and the control plane network element, and facilitate data packet transmission between the user plane network element and the control plane network element. In this method, the control plane network element sends a first request message to the user plane network element, where the first request message is used to request to establish a first user plane channel between the control plane network element and the user plane network element, and the first request message includes a control plane side endpoint identifier of the first user plane channel; the user plane network element receives the first request message from the control plane network element, and sends a first response message to the control plane network element based on the first request message, where the first response message is used to indicate that the first user plane channel is successfully established; the user plane network element sends a first data packet to the control plane network element via the first user plane channel; and the control plane network element receives, via the first user plane channel, the first data packet sent by the user plane network element, where the control plane network element and the user plane network element are network elements serving target user equipment. In the implementations of the present disclosure, the target user equipment may be any user equipment. Based on the network architecture shown in FIG. 2, the user plane network element may be at least one of the SGW user plane network element, the PGW user plane network element, and the TDF user plane network element, and correspondingly, the control plane network element may be at least one of the SGW control plane network element, the PGW control plane network element, and the TDF control plane network element.

In the implementations of the present disclosure, the user plane network element and the control plane network element are respectively described by using the SGW user plane network element and the SGW control plane network element as examples. For the PGW user plane network element, the PGW control plane network element, the TDF user plane network element, and the TDF control plane network element, refer to the implementations of the present disclosure. It should be noted that the user plane network element and the control plane network element mentioned in the following are respectively the SGW user plane network element and the SGW control plane network element, and there may be one or more control plane network elements and user plane network elements that are mentioned in the following. For ease of understanding, one control plane network element is used as an example for description in the implementations of the present disclosure. A case in which there are a plurality of control plane network elements may be deduced from this. Uplink and downlink data packets in the implementations of the present disclosure include an uplink data packet and/or a downlink data packet.

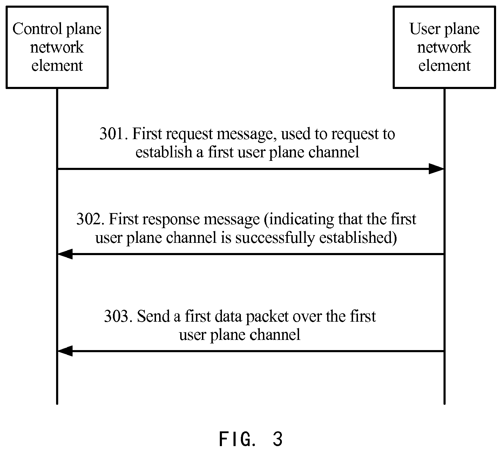

The following describes in detail the solutions provided in the implementations of the present disclosure with reference to FIG. 3 to FIG. 6.

FIG. 3 shows a data packet processing method according to an implementation of the present disclosure. The method shown in FIG. 3 may be applied to the network architecture shown in FIG. 2.

Step 301: A control plane network element sends a first request message to a user plane network element, where the first request message is used to request to establish a first user plane channel between the control plane network element and the user plane network element.

Because a relatively large quantity of control plane network elements and user plane network elements exist in a network, different control plane network elements and user plane network elements may be used based on information such as a geographical location and a requirement of user equipment. In this implementation of the present disclosure, the control plane network element and the user plane network element are network elements serving the target user equipment, namely, a control plane network element and a user plane network element that are required by the target user equipment in a process in which the target user equipment communicates with the network in an EPC core network or by using the EPC core network.

The first request message is used to request to establish the first user plane channel between the control plane network element and the user plane network element. It may be understood that the control plane network element notifies, by using the first request message, the user plane network element that the first user plane channel is to be established, and asks whether the user plane network element agrees to establish the first user plane channel. If the user plane network element agrees to establish the first user plane channel, the user plane network element feeds back a first response message to the control plane network element.

Because there may be one or more user plane network elements, the first user plane channel is not limited to one user plane channel. If there are a plurality of user plane network elements, there may be a plurality of first user plane channels, namely, user plane channels between the control plane network element and a plurality of user plane network elements; or there may be one user plane channel, in other words, one user plane channel is shared.

The first request message includes a control plane side endpoint identifier of the first user plane channel. The control plane side endpoint identifier is used to identify the control plane network element. To be specific, the control plane side endpoint identifier is an endpoint identifier of a side that initiates establishment of the first user plane channel. Generally, one user plane channel includes endpoint identifiers corresponding to two sides. The first request message definitely carries the control plane side endpoint identifier of the first user plane channel, and may or may not carry a user plane side endpoint identifier of the first user plane channel. The user plane side endpoint identifier of the first user plane channel is an endpoint identifier of a side that agrees to establish the first user plane channel. If the control plane network element may allocate an endpoint identifier to the user plane network element that is to establish the first user plane channel, the first request message carries the user plane side endpoint identifier of the first user plane channel. If there are a plurality of first user plane channels, the first request message carries a plurality of user plane side endpoint identifiers. If the control plane network element cannot allocate an endpoint identifier to the user plane network element that is to establish the first user plane channel, when the user plane network element receives the first request message, the user plane network element may allocate an endpoint identifier to the user plane network element that is to establish the first user plane channel, and adds the user plane side endpoint identifier of the first user plane channel to the first response message sent based on the first request message. Likewise, if there are a plurality of first user plane channels, the first response message carries a plurality of user plane side endpoint identifiers. An endpoint identifier is used to distinguish between a same type of network elements, and may be at least one of a tunnel endpoint identifier, a network element Internet Protocol (Internet Protocol, IP) address, a network element number, and a network element name.

In an example, a trigger condition is required for the control plane network element to send the first request message to the user plane network element. In other words, the control plane network element sends the first request message to the user plane network element only when a specified condition is met.

In a possible implementation, the control plane network element obtains a state of the target user equipment by using an MME, namely, learns whether the target user equipment is in an idle mode or in a connected mode. It may be understood that in the idle mode, a radio resource control (Radio Resource Control, RRC) connection between the user equipment and a base station is in a disconnected mode, namely, no data transmission is performed between the user equipment and the base station. In the connected mode, the RRC connection between the user equipment and the base station is in the connected mode, namely, data transmission is performed between the user equipment and the base station. It may be considered that the user equipment in a power saving mode or an airplane mode is in the idle mode. The MME may detect in real time an operating status of the target user equipment. Once the target user equipment enters the idle mode, the MME sends an indication message to the control plane network element, to indicate that the target user equipment is in the idle mode. When receiving the indication message that is sent by the MME and that indicates that the target user equipment is in the idle mode, the control plane network element may determine that a connection between the target user equipment and an access network is disconnected, and the first user plane channel needs to be established for data packet buffering. Therefore, when determining that the target user equipment is in the idle mode, the control plane network element sends the first request message to the user plane network element. In a possible implementation, when determining that the user plane network element is started, the control plane network element sends the first request message to the user plane network element. It may be understood that when the user plane network element is started, the first user plane channel needs to be established. When being started for the first time or restarted after fault recovery, the user plane network element sends an indication message to the control plane network element, to indicate that the user plane network element is started, and the first user plane channel needs to be established. Therefore, when receiving the indication message, the control plane network element sends the first request message to the user plane network element, to establish the first user plane channel.

The control plane side endpoint identifier that is of the first user plane channel and that is carried in the first request message is used to notify the user plane network element of a control plane network element with which a user plane channel is established and to which a data packet is sent. The user plane network element may receive a plurality of uplink and downlink data packets. Different data packets may be buffered on different control plane network elements. Therefore, the control plane network element needs to indicate, in the first request message, a data packet that needs to be buffered, and give an indication by adding a packet matching rule to the first request message. The packet matching rule is used to instruct the user plane network element to determine, from the received uplink and downlink data packets according to the packet matching rule, a first data packet that needs to be buffered on the control plane network element. The packet matching rule may vary depending on different control plane network elements. The packet matching rule may include but is not limited to a user plane endpoint identifier (for example, a tunnel endpoint identifier (Tunnel Endpoint Identifier, TEID), a fully qualified tunnel endpoint identifier (Fully Qualified TEID, F-TEID)), an IP address, application information (for example, an application ID), and a scenario indication information (for example, buffering (buffering), and lawful interception (Lawful Interception, LI)) that are in a packet.

Optionally, the control plane network element may establish the first user plane channel based on a channel granularity, and one or more first user plane channels may be established. The channel granularity may include one of a bearer granularity, a device granularity, a user granularity, and a session granularity. The bearer granularity may be understood as establishment of a plurality of user plane channels based on a one-to-multiple bearer relationship between the control plane network element and the user plane network element. The device granularity may be understood as establishment of one user plane channel for user equipments that access one access network device (base station). The user granularity may be understood as establishment of one user plane channel for different services of one user equipment. The session granularity may be understood as establishment of different user plane channels for different services. The control plane network element may establish the first user plane channel based on a plurality of granularities, so that adaptability can be improved, and a resource such as bandwidth can be saved when one user plane channel is established. The control plane network element may add granularity indication information to the first request message, to indicate a granularity based on which the first user plane channel is established, so that the user plane network element responds to the first request message based on the granularity indication information.

Optionally, the first request message further includes channel information of the first user plane channel, and the channel information includes at least one of encryption information, scenario indication information, and quality of service information. The encryption information may be an encryption key, an encryption algorithm, or the like, and is used to indicate an encryption manner of the first user plane channel, so that the control plane network element can decrypt a received data packet based on a corresponding decryption manner. The scenario indication information is used to indicate that the first user plane channel is used for buffering, lawful interception, IP address assignment of the target user equipment, forwarding of related data of the target user equipment based on Policy and Charging Control (Policy and Charging Control, PCC)/Application Data Center (Application Data Center, ADC), and the like. The quality of service information may include a QCI, an Allocation and Retention Priority (Allocation and Retention Priority, ARP), a maximum bit rate (Maximum Bit Rate, MBR), an aggregate maximum bit rate (Aggregate Maximum Bit Rate, AMBR), a guaranteed bit rate (Guaranteed Bit Rate, GBR), and the like.

Optionally, the first request message further includes a packet processing rule. The packet processing rule is used to instruct the user plane network element to add identification information of a second user plane channel to the first data packet. The user plane network element may add the identification information of the second user plane channel to a packet header or a packet body of the first data packet. It should be noted that the second user plane channel is not a user plane channel between the control plane network element and the user plane network element, but a user plane channel between the user plane network element and a base station in the access network and/or a user plane channel between user plane network elements (namely, between the user plane network element and another user plane network element). The identification information of the second user plane channel includes at least one of an endpoint identifier of the second user plane channel, an identifier of the target user equipment, a service identifier, a packet priority identifier, the packet matching rule, and the packet processing rule. If the second user plane channel is a user plane channel between the user plane network element and a base station, the endpoint identifier of the second user plane channel includes at least one of a user plane side endpoint identifier and a base station endpoint identifier. If the second user plane channel is a user plane channel between user plane network elements, the endpoint identifier of the second user plane channel includes at least an endpoint identifier of one user plane side network element. The identifier of the target device may include but is not limited to a device version, an international mobile equipment identity (international mobile equipment identity, IMEI), a device name, and an international mobile subscriber identity (International Mobile Subscriber Identity, IMSI). The service identifier may include a service type (Service Type), a network slice type (Slice Type), an APN name, a Data Network (Data Network, DN) name, and the like. The packet priority identifier is used to indicate a sending priority. The packet matching rule is used to indicate a rule that is used to identify the first data packet or obtain the first data packet through matching. The packet processing rule is used to indicate a processing rule of the first data packet, so that a receiver that receives the first data packet can learn of processing that is performed on the first data packet.

Step 302: The user plane network element sends a first response message to the control plane network element, where the first response message is used to indicate that the first user plane channel is successfully established. In an example, if the user plane network element agrees to establish the first user plane channel when receiving the first request message, the user plane network element sends the first response message to the control plane network element, to indicate that the first user plane channel is successfully established, and the first user plane channel can be used.

Optionally, the user plane network element detects whether the first request message carries the user plane side endpoint identifier of the first user plane channel. If the first request message carries the user plane side endpoint identifier of the first user plane channel, the first user plane channel is established based on the user plane side endpoint identifier of the first user plane channel and the control plane side endpoint identifier of the first user plane channel. If the first request message does not carry the user plane side endpoint identifier of the first user plane channel, the user plane side endpoint identifier of the first user plane channel is allocated, the first user plane channel is established based on the allocated user plane side endpoint identifier of the first user plane channel and the control plane side endpoint identifier of the first user plane channel, and the first response message that carries the user plane side endpoint identifier of the first user plane channel is sent to the control plane network element, so that the control plane network element learns of a user plane network element with which the first user plane channel is established.

Step 303: The user plane network element sends a first data packet to the control plane network element via the first user plane channel.

In an example, after the first user plane channel is established, if the user plane network element receives the uplink and downlink data packets, the user plane network element determines the first data packet from the received uplink and downlink data packets according to the packet matching rule, and sends the first data packet to the control plane network element via the first user plane channel. The uplink and downlink data packets include an uplink data packet and/or a downlink data packet. The uplink data packet includes a data packet sent to the network, and the downlink data packet includes a data packet sent to the target user equipment.

After receiving the first data packet, the control plane network element may forward the first data packet to the user plane network element when the target user equipment is in the connected mode. If the control plane network element does not have a data packet buffering function, after receiving the first data packet, the control plane network element forwards the first data packet to another control plane network element that has the data packet buffering function.

In this implementation of the present disclosure, the control plane network element sends the first request message to the user plane network element to establish the first user plane channel between the control plane network element and the user plane network element, so that the control plane network element receives, via the first user plane channel, the first data packet sent by the user plane network element, so as to implement establishment of a user plane channel between the user plane network element and the control plane network element, and facilitate data packet transmission between the user plane network element and the control plane network element.

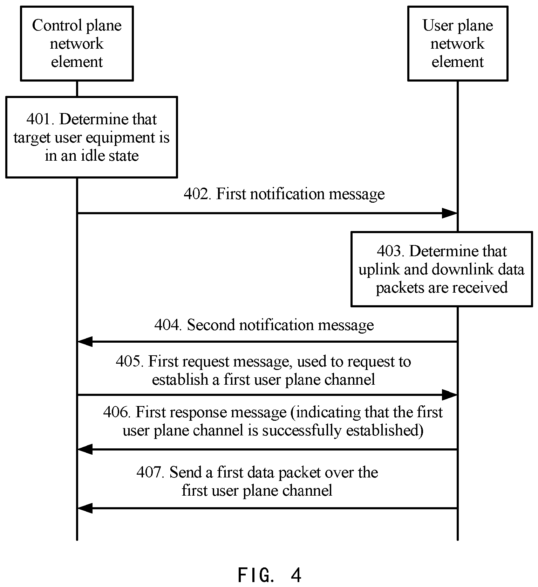

FIG. 4 shows another data packet processing method according to an implementation of the present disclosure. It should be noted that for a part that is of the implementation shown in FIG. 4 and that is the same as or similar to the implementation shown in FIG. 3, refer to the specific descriptions of the implementation shown in FIG. 3. Details are not described herein again.

Step 401: A control plane network element determines that target user equipment is in an idle mode.

In an example, the control plane network element obtains a state of the target user equipment by using an MME, namely, learns whether the target user equipment is in the idle mode or in a connected mode. It may be understood that in the idle mode, an RRC connection between the user equipment and a base station is in a disconnected mode, namely, no data transmission is performed between the user equipment and the base station. In the connected mode, the RRC connection between the user equipment and the base station is in the connected mode, namely, data transmission is performed between the user equipment and the base station. It may be considered that the user equipment in a power saving mode or an airplane mode is in the idle mode. The MME may detect in real time an operating status of the target user equipment. Once the target user equipment enters the idle mode, the MME sends an indication message to the control plane network element, to indicate that the target user equipment is in the idle mode. When receiving the indication message that is sent by the MME and that indicates that the target user equipment is in the idle mode, the control plane network element may determine that a connection between the target user equipment and an access network is disconnected, and the first user plane channel needs to be established for data packet buffering.

Step 402: The control plane network element sends a first notification message to the user plane network element.

In an example, in the implementation shown in FIG. 4, establishment of the first user plane channel is not initiated when the target user equipment is in the idle mode, but initiated only when the user plane network element receives uplink and downlink data packets. Therefore, according to the invention, the control plane network element sends the first notification message to the user plane network element when determining that the target user equipment is in the idle mode. The first notification message is used to instruct the user plane network element to send a second notification message to the control plane network element when the user plane network element receives the uplink and downlink data packets. The second notification message is used by the user plane network element to notify the control plane network element that the uplink and downlink data packets are received.

Step 403: The user plane network element determines that uplink and downlink data packets are received.

It should be noted that, that the user plane network element determines that the uplink and downlink data packets are received may be performed before step 402, or may be performed after step 402. A sequence of step 402 and step 403 is not limited.

Step 404: The user plane network element sends a second notification message to the control plane network element.

In an example, the user plane network element sends the second notification message to the control plane network element once receiving the first notification message and the uplink and downlink data packet. The second notification message is used by the user plane network element to notify the control plane network element that the uplink and downlink data packets are received, and the first user plane channel may be established.

Step 405: The control plane network element sends the first request message to the user plane network element, where the first request message is used to request to establish a first user plane channel between the control plane network element and the user plane network element.

Step 406: The user plane network element sends a first response message to the control plane network element, where the first response message is used to indicate that the first user plane channel is successfully established. Step 407: The user plane network element sends a first data packet to the control plane network element via the first user plane channel.

In this implementation of the present disclosure, when determining that the user plane network element receives the uplink and downlink data packets, the control plane network element initiates and establishes a user plane channel between the control plane network element and the user plane network element, and determines an opportunity to establish the user plane channel between the user plane network element and the control plane network element, so as to further save a resource such as bandwidth of the user plane network element and improve resource allocation efficiency.

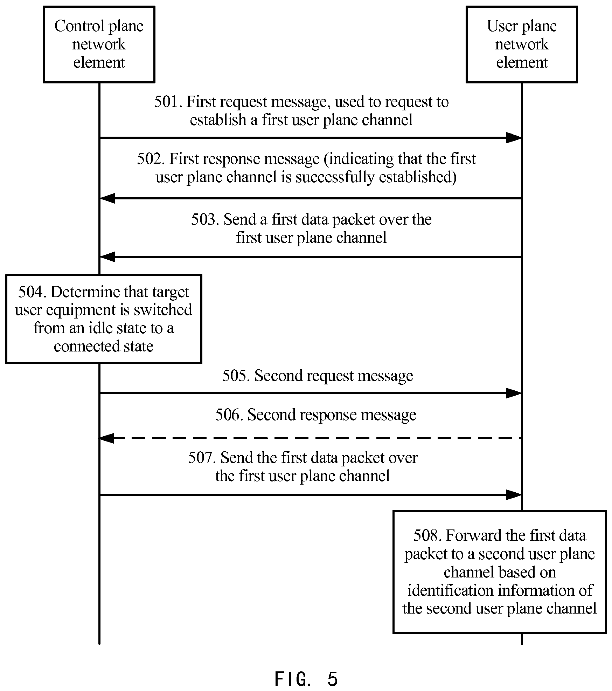

FIG. 5 shows still another data packet processing method according to an implementation of the present disclosure. It should be noted that for a part that is of the implementation shown in FIG. 5 and that is the same as or similar to the implementation shown in FIG. 3, refer to the specific descriptions of the implementation shown in FIG. 3. Details are not described herein again.

Step 501: A control plane network element sends a first request message to a user plane network element, where the first request message is used to request to establish a first user plane channel between the control plane network element and the user plane network element.

Step 502: The user plane network element sends a first response message to the control plane network element, where the first response message is used to indicate that the first user plane channel is successfully established. Step 503: The user plane network element sends a first data packet to the control plane network element via the first user plane channel.

Step 504: The control plane network element determines that target user equipment is switched from an idle mode to a connected mode.

An implementation process of determining that the target user equipment is switched from the idle mode to the connected mode is the same as a method for determining that the target user equipment is in the idle mode. Details are not described herein again.

Step 505: The control plane network element sends a second request message to the user plane network element.

In an example, when determining that the target user equipment is in the connected mode, the control plane network element may determine that the first data packet buffered on the control plane network element needs to be forwarded to the target user equipment or a network. In this case, the control plane network element sends the second request message to the user plane network element. The second request message is used to instruct the user plane network element to forward the first data packet to a second user plane channel based on identification information of the second user plane channel when the user plane network element receives the first data packet. For description of the second user plane channel, refer to the description of the second user plane channel in the implementation shown in FIG. 3.

Step 506: The user plane network element sends a second response message to the control plane network element.

This step may be an optional step. In other words, when receiving the second request message, the user plane network element may send the second response message to the control plane network element, to notify the control plane network element that the second request message has been received; or the user plane network element may not send the second response message to the control plane network element.

Step 507: The control plane network element sends the first data packet to the user plane network element via the first user plane channel.

After sending the second request message, the control plane network element sends the first data packet to the user plane network element via the first user plane channel. To be specific, the control plane network element returns the buffered first data packet to the user plane network element, and the user plane network element performs a subsequent process.

If all first data packets have been sent to the user plane network element, the control plane network element sends, to the user plane network element, a third request message that carries an endpoint identifier of the first user plane channel. The third request message is used to request the user plane network element to delete the first user plane channel based on the endpoint identifier of the first user plane channel. The endpoint identifier of the first user plane channel includes a control plane side endpoint identifier of the first user plane channel and/or a user plane side endpoint identifier of the first user plane channel. If the user plane network element agrees to delete the first user plane channel when receiving the third request message, the user plane network element sends a third response message to the control plane network element. The third response message is used to indicate that the first user plane channel is deleted. The control plane network element receives the third response message from the user plane network element. The control plane network element deletes the first user plane channel after forwarding all the first data packets, so that resources such as bandwidth of the control plane network element and the user plane network element can be saved.

Step 508: The user plane network element forwards the first data packet to a second user plane channel based on identification information of the second user plane channel.

When receiving a second notification message and the first data packet, the user plane network element forwards the first data packet to the second user plane channel based on the identification information of the second user plane channel. The user plane network element may process the first data packet based on the identification information of the second user plane channel, and then forward the first data packet to the second user plane channel.

It should be noted that steps 504 to 508 may also be performed after step 407 in the implementation shown in FIG. 4.

In this implementation of the present disclosure, after the first user plane channel is established and the target user equipment is switched from the idle mode to the connected mode, the control plane network element forwards the buffered first data packet to the second user plane channel by using the user plane network element, so that the target user equipment or the network can receive the first data packet, a data packet loss can be avoided, and a resource such as bandwidth can be saved in this process.

The foregoing mainly describes the solutions in the implementations of the present disclosure from a perspective of interaction between network elements. It may be understood that to implement the foregoing functions, each network element such as a control plane network element or a user plane network element includes a corresponding hardware structure and/or software module for performing each function. A person skilled in the art should easily be aware that in combination with the examples described in the implementations disclosed in this specification, units and algorithm steps may be implemented in a form of hardware or in a form of a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present disclosure.

In the implementations of the present disclosure, function module division may be performed on the control plane network element, the user plane network element, and the like based on the foregoing method example. For example, each function module may be obtained through division based on a corresponding function, or two or more functions may be integrated into one processing module. The integrated module may be implemented in a form of hardware, or may be implemented in a form of a software function module. It should be noted that the module division in the implementations of the present disclosure is an example, is merely logical function division, and may be another division manner in actual implementation.

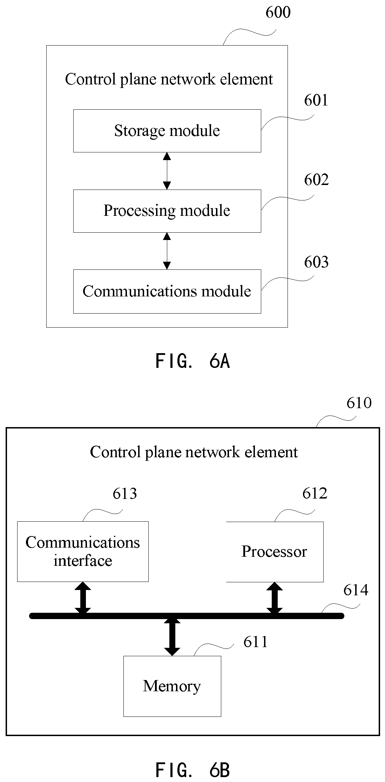

When the integrated module is used, FIG. 6A shows a possible schematic structural diagram of the control plane network element in the foregoing implementations. A control plane network element 600 includes: a processing module 602 and a communications module 603. The processing module 602 is configured to control and manage an action of the control plane network element. For example, the processing module 602 is configured to support the control plane network element in performing the step 401 in FIG. 4, the step 504 in FIG. 5, and/or another process of the technology described in this specification. The communications module 603 is configured to support communication between the control plane network element and a user plane network element or another network entity. The control plane network element may further include a storage module 601, configured to store program code and data of the control plane network element.

The processing module 602 may be a processor or a controller, such as a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 602 may implement or execute various example logical blocks, modules, and circuits described with reference to content disclosed in the present disclosure. Alternatively, the processor may be a combination that implements a computing function, for example, a combination of one or more microprocessors, or a combination of the DSP and a microprocessor. The communications module 603 may be a communications interface, a transceiver, a transceiver circuit, or the like. The communications interface is a general term, and may include one or more interfaces. The storage module 601 may be a memory.

When the processing module 602 is a processor, the communications module 603 is a communications interface, and the storage module 601 is a memory, the control plane network element in this implementation of the present disclosure may be a control plane network element 610 shown in FIG. 6B.

As shown in FIG. 6B, the control plane network element 610 includes a processor 612, a communications interface 613, and a memory 611. Optionally, the control plane network element 610 may further include a bus 614. The communications interface 613, the processor 612, and the memory 611 may be connected to each other by using the bus 614. The bus 614 may be a peripheral component interconnect (Peripheral Component Interconnect, PCI for short) bus, an extended industry standard architecture (Extended Industry Standard Architecture, EISA for short) bus, or the like. The bus 614 may be classified into an address bus, a data bus, a control bus, and the like. For ease of representation, only one thick line is used in FIG. 6B for representation, but it does not indicate that there is only one bus or one type of bus.

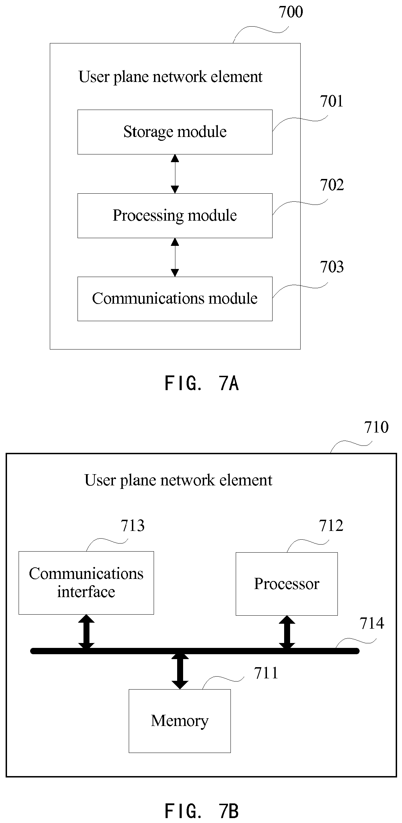

When the integrated module is used, FIG. 7A shows a possible schematic structural diagram of the user plane network element in the foregoing implementations. A user plane network element 700 includes: a processing module 702 and a communications module 703. The processing module 702 is configured to control and manage an action of the user plane network element. For example, the processing module 702 is configured to support the user plane network element in performing the step 403 in FIG. 4 and/or another process of the technology described in this specification. The communications module 703 is configured to support communication between the user plane network element and a control plane network element or another network entity. The user plane network element may further include a storage module 701, configured to store program code and data of the user plane network element.

The processing module 702 may be a processor or a controller, for example, a central processing unit, a general purpose processor, a digital signal processor, an application-specific integrated circuit, a field programmable gate array, or another programmable logic device, a transistor logic device, a hardware component, or any combination thereof. The processing module 702 may implement or execute various example logical blocks, modules, and circuits described with reference to content disclosed in the present disclosure. Alternatively, the processor may be a combination that implements a computing function, for example, a combination of one or more microprocessors, or a combination of the DSP and a microprocessor. The communications module 703 may be a communications interface, a transceiver, a transceiver circuit, or the like. The communications interface is a general term, and may include one or more interfaces. The storage module 701 may be a memory. When the processing module 702 is a processor, the communications module 703 is a communications interface, and the storage module 701 is a memory, the user plane network element in this implementation of the present disclosure may be a user plane network element 710 shown in FIG. 7B.

As shown in FIG. 7B, the user plane network element 710 includes a processor 712, a communications interface 713, and a memory 711. Optionally, the user plane network element 710 may further include a bus 714. The communications interface 713, the processor 712, and the memory 711 may be connected to each other by using the bus 714. The bus 714 may be a peripheral component interconnect bus, an extended industry standard architecture bus, or the like. The bus 714 may be classified into an address bus, a data bus, a control bus, and the like. For ease of representation, only one thick line is used in FIG. 7B for representation, but it does not indicate that there is only one bus or one type of bus.

The methods or algorithm steps described with reference to the content disclosed in the implementations of the present disclosure may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read-Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or a storage medium in any other forms well-known in the art. An example storage medium is coupled to the processor, so that the processor can read information from the storage medium, and can write information into the storage medium. Certainly, alternatively, the storage medium may be a component of the processor. The processor and the storage medium may be located in an ASIC. In addition, the ASIC may be located in a core network interface device. Certainly, the processor and the storage medium may exist in the core network interface device as discrete assemblies.

A person of skill in the art should be aware that in one or more of the foregoing examples, the functions described in the implementations of the present disclosure may be implemented by using hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a general or dedicated computer.

## Claims

1. A data packet processing method, comprising:
sending (301), by a control plane network element (600, 610), a first request message to a user plane network element (700, 710), wherein the first request message is used to request to establish a first user plane channel between the control plane network element (600, 610) and the user plane network element (700, 710), and the first request message comprises a control plane side endpoint identifier of the first user plane channel;
receiving (302), by the control plane network element (600, 610), a first response message from the user plane network element (700, 710), wherein the first response message is used to indicate that the first user plane channel is successfully established; and
receiving (303), by the control plane network element (600, 610) via the first user plane channel, a first data packet sent by the user plane network element (700, 710), wherein
the control plane network element (600, 610) and the user plane network element (700, 710) are network elements serving target user equipment, the control plane network element (600, 610) and the user plane network element (700, 710) of a same core network element are separated, and
wherein the method is **characterized in that**
the sending (301), by a control plane network element (600, 610), the first request message to a user plane network element (700, 710) comprises:
sending (402), by the control plane network element (600, 610), the first request message to the user plane network element (700, 710) when the control plane network element (600, 610) determines that the target user equipment is in an idle mode.

2. The method according to claim 1, wherein the sending, by the control plane network element, the first request message to the user plane network element (700, 710) comprises:
sending, by the control plane network element (600, 610), a first notification message to the user plane network element (700, 710) when determining that the target user equipment is in the idle mode, wherein
the first notification message is used to instruct the user plane network element (700, 710) to send a second notification message to the control plane network element (600, 610) when the user plane network element (700, 710) receives a uplink data packet and a downlink data packet, and
the second notification message is used by the user plane network element (700, 710) to notify the control plane network element (600, 610) that the uplink and downlink data packets are received;
receiving, by the control plane network element (600, 610), the second notification message from the user plane network element (700, 710) notifying the receiving of the first notification message and the uplink and downlink data packets; and
sending, by the control plane network element (600, 610), the first request message to the user plane network element (700, 710) after receiving the second notification message.

3. The method according to claim 1 or 2, wherein the first request message comprises a packet matching rule, the packet matching rule is used to instruct the user plane network element (700, 710) to determine the first data packet from received uplink and downlink data packets according to the packet matching rule, and the uplink and downlink data packets comprise an uplink data packet and/or a downlink data packet.

4. The method according to any one of claims 1 to 3, wherein the method further comprises:
forwarding, by the control plane network element (600, 610), the first data packet to the user plane network element (700, 710) and/or another control plane network element (600, 610).

5. A data packet processing method, comprising:
sending (301), by a control plane network element (600, 610), a first request message to a user plane network element (700, 710);
receiving (301), by the user plane network element (700, 710), the first request message from the control plane network element (600, 610), wherein the first request message is used to request to establish a first user plane channel between the control plane network element (600, 610) and the user plane network element (700, 710), and the first request message comprises a control plane side endpoint identifier of the first user plane channel;
sending (302), by the user plane network element (700, 710), a first response message to the control plane network element (600, 610) based on the first request message, wherein the first response message is used to indicate that the first user plane channel is successfully established; and
sending (303), by the user plane network element (700, 710), a first data packet to the control plane network element (600, 610) via the first user plane channel, wherein
the control plane network element (600, 610) and the user plane network element (700, 710) are network elements serving target user equipment, the control plane network element (600, 610) and the user plane network element (700, 710) of a same core network element are separated, and
the method is **characterized in that** the sending (301), by a control plane network element (600, 610), the first request message to a user plane network element (700, 710) comprises:
sending (402), by the control plane network element (600, 610), the first request message to the user plane network element (700, 710) when the control plane network element (600, 610) determines that the target user equipment is in an idle mode.

6. The method according to claim 5, wherein the first request message comprises a packet matching rule; and
the sending, by the user plane network element (700, 710), a first data packet to the control plane network element (600, 610) via the first user plane channel comprises:
determining, by the user plane network element (700, 710), the first data packet from received uplink and downlink data packets according to the packet matching rule, wherein the uplink and downlink data packets comprise an uplink data packet and/or a downlink data packet; and
sending, by the user plane network element (700, 710), the first data packet to the control plane network element (600, 610) via the first user plane channel.

7. The method according to claim 5 or 6, wherein the first request message further comprises a packet processing rule; and
the method further comprises:
adding, by the user plane network element (700, 710), identification information of a second user plane channel to the first data packet based on the packet processing rule, wherein the identification information of the second user plane channel comprises at least one of an endpoint identifier of the second user plane channel, an identifier of the target user equipment, a service identifier, a packet priority identifier, the packet matching rule, and the packet processing rule.

8. A control plane network element (600, 610), comprising: a processing module and a communications module, wherein
the processing module (602) is configured to send a first request message to a user plane network element (700, 710) by using the communications module, wherein the first request message is used to request to establish a first user plane channel between the control plane network element (600, 610) and the user plane network element (700, 710), and the first request message comprises a control plane side endpoint identifier of the first user plane channel;
the processing module (602) is further configured to receive a first response message from the user plane network element (700, 710) by using the communications module, wherein the first response message is used to indicate that the first user plane channel is successfully established; and
the processing module (602) is further configured to receive, via the first user plane channel by using the communications module, a first data packet sent by the user plane network element (700, 710), wherein
the control plane network element (600, 610) and the user plane network element (700, 710) are network elements serving target user equipment, the control plane network element (600, 610) and the user plane network element (700, 710) of a same core network element are separated,
wherein the control plane network element is **characterized in that** the processing module (602) is configured to: when determining that the target user equipment is in an idle mode, send the first request message to the user plane network element (700, 710) by using the communications module.

9. The control plane network element (600, 610) according to claim 8, wherein the processing module (602) is configured to, when determining that the target user equipment is in an idle mode, send the first request message comprising the processing module being configured to:
send a first notification message to the user plane network element (700, 710) when determining that the target user equipment is in the idle mode, wherein
the first notification message is used to instruct the user plane network element (700, 710) to send a second notification message to the control plane network element (600, 610) when the user plane network element (700, 710) receives a uplink data packet and a downlink data packet, and
the second notification message is used by the user plane network element (700, 710) to notify the control plane network element (600, 610) that the uplink and downlink data packets are received;
receive the second notification message from the user plane network element (700, 710) notifying the receiving of the first notification message and the uplink and downlink data packets; and
send the first request message to the user plane network element (700, 710) after receiving the second notification message.

10. The control plane network element (600, 610) according to claim 8 or 9, wherein the first request message comprises a packet matching rule, the packet matching rule is used to instruct the user plane network element (700, 710) to determine the first data packet from received uplink and downlink data packets according to the packet matching rule, and the uplink and downlink data packets comprise an uplink data packet and/or a downlink data packet.

11. The control plane network element (600, 610) according to any one of claims 8 to 10, wherein the processing module is further configured to forward the first data packet to the user plane network element (700, 710) and/or another control plane network element (600, 610) by using the communications module.

12. A data packet processing system comprising the control plane network element (600, 610) according to any one of claims 8 to 11 and a user plane network element (700, 710), the user plane network element (700, 710) comprising: a processing module and a communications module, wherein
the processing module (702) is configured to receive a first request message from a control plane network element (600, 610) by using the communications module, wherein the first request message is used to request to establish a first user plane channel between the control plane network element (600, 610) and the user plane network element (700, 710), and the first request message comprises a control plane side endpoint identifier of the first user plane channel;
the processing module is further configured to send, based on the first request message, a first response message to the control plane network element (600, 610) by using the communications module, wherein the first response message is used to indicate that the first user plane channel is successfully established; and
the processing module is further configured to send, via the first user plane channel, a first data packet to the control plane network element (600, 610) by using the communications module, wherein
the control plane network element (600, 610) and the user plane network element (700, 710) are network elements serving target user equipment, the control plane network element (600, 610) and the user plane network element (700, 710) of a same core network element are separated, wherein the processing module (702) is configured to receive the first request message from the control plane network element (600, 610) when the target user equipment is in an idle mode.

13. The data packet processing system according to claim 12, wherein the first request message comprises a packet matching rule; and
the processing module is specifically configured to: determine the first data packet from received uplink and downlink data packets according to the packet matching rule, wherein the uplink and downlink data packets comprise an uplink data packet and/or a downlink data packet; and send, via the first user plane channel, the first data packet to the control plane network element (600, 610) by using the communications module.

14. The data packet processing system according to claim 12 or 13, wherein the first request message further comprises a packet processing rule; and
the processing module is further configured to add identification information of a second user plane channel to the first data packet based on the packet processing rule, wherein the identification information of the second user plane channel comprises at least one of an endpoint identifier of the second user plane channel, an identifier of the target user equipment, a service identifier, a packet priority identifier, the packet matching rule, and the packet processing rule.

## Patentansprüche

1. Datenpaketverarbeitungsverfahren, umfassend:
Senden (301), durch ein Steuerebenen-Netzelement (600, 610), einer ersten Anforderungsnachricht zu einem Benutzerebenen-Netzelement (700, 710), wobei die erste Anforderungsnachricht verwendet wird, um den Aufbau eines ersten Benutzerebenenkanals zwischen dem Steuerebenen-Netzelement (600, 610) und dem Benutzerebenen-Netzelement (700, 710) anzufordern, und die erste Anforderungsnachricht eine steuerebenenseitige Endpunktkennung des ersten Benutzerebenenkanals umfasst;
Empfangen (302), durch das Steuerebenen-Netzelement (600, 610), einer ersten Antwortnachricht von dem Benutzerebenen-Netzelement (700, 710), wobei die erste Antwortnachricht verwendet wird, um anzugeben, dass der erste Benutzerebenenkanal erfolgreich aufgebaut ist; und
Empfangen (303), durch das Steuerebenen-Netzelement (600, 610) über den ersten Benutzerebenenkanal, eines ersten Datenpakets, das durch das Benutzerebenen-Netzelement (700, 710) gesendet wird, wobei
das Steuerebenen-Netzelement (600, 610) und das Benutzerebenen-Netzelement (700, 710) Netzelemente sind, die ein Zielbenutzergerät bedienen, wobei das Steuerebenen-Netzelement (600, 610) und das Benutzerebenen-Netzelement (700, 710) eines selben Kernnetzelements getrennt sind und wobei das Verfahren **dadurch gekennzeichnet ist, dass**
das Senden (301), durch ein Steuerebenen-Netzelement (600, 610), der ersten Anforderungsnachricht zu einem Benutzerebenen-Netzelement (700, 710) umfasst:
Senden (402), durch das Steuerebenen-Netzelement (600, 610), der ersten Anforderungsnachricht zu dem Benutzerebenen-Netzelement (700, 710), wenn das Steuerebenen-Netzelement (600, 610) bestimmt, dass sich das Zielbenutzergerät in einem Ruhezustand befindet.

2. Verfahren nach Anspruch 1, wobei das Senden, durch das Steuerebenen-Netzelement, der ersten Anforderungsnachricht zu dem Benutzerebenen-Netzelement (700, 710) umfasst:
Senden, durch das Steuerebenen-Netzelement (600, 610), einer ersten Benachrichtigungsnachricht zu dem Benutzerebenen-Netzelement (700, 710), wenn bestimmt wird, dass sich das Zielbenutzergerät in dem Ruhezustand befindet,
wobei
die erste Benachrichtigungsnachricht verwendet wird, um das Benutzerebenen-Netzelement (700, 710) anzuweisen, eine zweite Benachrichtigungsnachricht zu dem Steuerebenen-Netzelement (600, 610) zu senden, wenn das Benutzerebenen-Netzelement (700, 710) ein Uplink-Datenpaket und ein Downlink-Datenpaket empfängt, und
die zweite Benachrichtigungsnachricht durch das Benutzerebenen-Netzelement (700, 710) verwendet wird, um das Steuerebenen-Netzelement (600, 610) zu benachrichtigen, dass die Uplink- und Downlink-Datenpakete empfangen werden, Empfangen, durch das Steuerebenen-Netzelement (600, 610), der zweiten Benachrichtigungsnachricht von dem Benutzerebenen-Netzelement (700, 710), die den Empfang der ersten Benachrichtigungsnachricht und der Uplink- und Downlink-Datenpakete meldet; und
Senden, durch das Steuerebenen-Netzelement (600, 610), der ersten Anforderungsnachricht zu dem Benutzerebenen-Netzelement (700, 710) nach dem Empfang der zweiten Benachrichtigungsnachricht.

3. Verfahren nach Anspruch 1 oder 2, wobei die erste Anforderungsnachricht eine Paketabgleichregel umfasst, wobei die Paketabgleichregel verwendet wird, um das Benutzerebenen-Netzelement (700, 710) anzuweisen, das erste Datenpaket aus empfangenen Uplink- und Downlink-Datenpaketen gemäß der Paketabgleichregel zu bestimmen, und die Uplink- und Downlink-Datenpakete ein Uplink-Datenpaket und/oder ein Downlink-Datenpaket umfassen.

4. Verfahren nach einem der Ansprüche 1 bis 3, wobei das Verfahren ferner umfasst:
Weiterleiten, durch das Steuerebenen-Netzelement (600, 610), des ersten Datenpakets an das Benutzerebenen-Netzelement (700, 710) und/oder ein anderes Steuerebenen-Netzelement (600, 610).

5. Datenpaketverarbeitungsverfahren, umfassend:
Senden (301), durch ein Steuerebenen-Netzelement (600, 610), einer ersten Anforderungsnachricht zu einem Benutzerebenen-Netzelement (700, 710);
Empfangen (301), durch das Benutzerebenen-Netzelement (700, 710), der ersten Anforderungsnachricht von dem Steuerebenen-Netzelement (600, 610), wobei die erste Anforderungsnachricht verwendet wird, um den Aufbau eines ersten Benutzerebenenkanals zwischen dem Steuerebenen-Netzelement (600, 610) und dem Benutzerebenen-Netzelement (700, 710) anzufordern, und die erste Anforderungsnachricht eine steuerebenenseitige Endpunktkennung des ersten Benutzerebenenkanals umfasst;
Senden (302), durch das Benutzerebenen-Netzelement (700, 710), einer ersten Antwortnachricht zu dem Steuerebenen-Netzelement (600, 610) basierend auf der ersten Anforderungsnachricht, wobei die erste Antwortnachricht verwendet wird, um anzugeben, dass der erste Benutzerebenenkanal erfolgreich aufgebaut ist; und
Senden (303), durch das Benutzerebenen-Netzelement (700, 710), eines ersten Datenpakets zu dem Steuerebenen-Netzelement (600, 610) über den ersten Benutzerebenenkanal, wobei
das Steuerebenen-Netzelement (600, 610) und das Benutzerebenen-Netzelement (700, 710) Netzelemente sind, die ein Zielbenutzergerät bedienen, wobei das Steuerebenen-Netzelement (600, 610) und das Benutzerebenen-Netzelement (700, 710) eines selben Kernnetzelements getrennt sind, und wobei das Verfahren **dadurch gekennzeichnet ist, dass** das Senden (301), durch ein Steuerebenen-Netzelement (600, 610), der ersten Anforderungsnachricht zu einem Benutzerebenen-Netzelement (700, 710) umfasst:
Senden (402), durch das Steuerebenen-Netzelement (600, 610), der ersten Anforderungsnachricht zu dem Benutzerebenen-Netzelement (700, 710), wenn das Steuerebenen-Netzelement (600, 610) bestimmt, dass sich das Zielbenutzergerät in einem Ruhezustand befindet.

6. Verfahren nach Anspruch 5, wobei die erste Anforderungsnachricht eine Paketabgleichregel umfasst; und
das Senden, durch das Benutzerebenen-Netzelement (700, 710), eines ersten Datenpakets zu dem Steuerebenen-Netzelement (600, 610) über den ersten Benutzerebenenkanal umfasst:
Bestimmen, durch das Benutzerebenen-Netzelement (700, 710), des ersten Datenpakets aus empfangenen Uplink- und Downlink-Datenpaketen gemäß der Paketabgleichregel, wobei die Uplink- und Downlink-Datenpakete ein Uplink-Datenpaket und/oder ein Downlink-Datenpaket umfassen; und
Senden, durch das Benutzerebenen-Netzelement (700, 710), des ersten Datenpakets zu dem Steuerebenen-Netzelement (600, 610) über den ersten Benutzerebenenkanal.

7. Verfahren nach Anspruch 5 oder 6, wobei die erste Anforderungsnachricht ferner eine Paketverarbeitungsregel umfasst; und
das Verfahren ferner umfasst:
Hinzufügen, durch das Benutzerebenen-Netzelement (700, 710), von Identifikationsinformationen eines zweiten Benutzerebenenkanals zu dem ersten Datenpaket basierend auf der Paketverarbeitungsregel, wobei die Identifikationsinformationen des zweiten Benutzerebenenkanals mindestens eines von einer Endpunktkennung des zweiten Benutzerebenenkanals, einer Kennung des Zielbenutzergeräts, einer Dienstkennung, einer Paketprioritätskennung, der Paketabgleichregel und der Paketverarbeitungsregel umfassen.

8. Steuerebenen-Netzelement (600, 610), umfassend: ein Verarbeitungsmodul und ein Kommunikationsmodul, wobei
das Verarbeitungsmodul (602) ausgelegt ist zum Senden einer ersten Anforderungsnachricht zu einem Benutzerebenen-Netzelement (700, 710) unter Verwendung des Kommunikationsmoduls, wobei die erste Anforderungsnachricht verwendet wird, um den Aufbau eines ersten Benutzerebenenkanals zwischen dem Steuerebenen-Netzelement (600, 610) und dem Benutzerebenen-Netzelement (700, 710) anzufordern, und die erste Anforderungsnachricht eine steuerebenenseitige Endpunktkennung des ersten Benutzerebenenkanals umfasst;
das Verarbeitungsmodul (602) ferner ausgelegt ist zum Empfangen einer ersten Antwortnachricht von dem Benutzerebenen-Netzelement (700, 710) unter Verwendung des Kommunikationsmoduls, wobei die erste Antwortnachricht verwendet wird, um anzugeben, dass der erste Benutzerebenenkanal erfolgreich aufgebaut ist; und
das Verarbeitungsmodul (602) ferner ausgelegt ist zum Empfangen, über den ersten Benutzerebenenkanal unter Verwendung des Kommunikationsmoduls, eines ersten Datenpakets, das durch das Benutzerebenen-Netzelement (700, 710) gesendet wird, wobei
das Steuerebenen-Netzelement (600, 610) und das Benutzerebenen-Netzelement (700, 710) Netzelemente sind, die ein Zielbenutzergerät bedienen, wobei das Steuerebenen-Netzelement (600, 610) und das Benutzerebenen-Netzelement (700, 710) eines selben Kernnetzelements getrennt sind, wobei das Steuerebenen-Netzelement **dadurch gekennzeichnet ist, dass**
das Verarbeitungsmodul (602) ausgelegt ist zum: wenn bestimmt wird, dass sich das Zielbenutzergerät in einem Ruhezustand befindet, Senden der ersten Anforderungsnachricht zu dem Benutzerebenen-Netzelement (700, 710) unter Verwendung des Kommunikationsmoduls.

9. Steuerebenen-Netzelement (600, 610) nach Anspruch 8, wobei, dass das Verarbeitungsmodul (602), wenn bestimmt wird, dass sich das Zielbenutzergerät in einem Ruhezustand befindet, ausgelegt ist zum Senden der ersten Anforderungsnachricht umfasst, dass das Verarbeitungsmodul ausgelegt ist zum:
Senden einer ersten Benachrichtigungsnachricht zu dem Benutzerebenen-Netzelement (700, 710), wenn bestimmt wird, dass sich das Zielbenutzergerät in dem Ruhezustand befindet, wobei
die erste Benachrichtigungsnachricht verwendet wird, um das Benutzerebenen-Netzelement (700, 710) anzuweisen, eine zweite Benachrichtigungsnachricht zu dem Steuerebenen-Netzelement (600, 610) zu senden, wenn das Benutzerebenen-Netzelement (700, 710) ein Uplink-Datenpaket und ein Downlink-Datenpaket empfängt, und
die zweite Benachrichtigungsnachricht durch das Benutzerebenen-Netzelement (700, 710) verwendet wird, um das Steuerebenen-Netzelement (600, 610) zu benachrichtigen, dass die Uplink- und Downlink-Datenpakete empfangen werden,
Empfangen der zweiten Benachrichtigungsnachricht von dem Benutzerebenen-Netzelement (700, 710), die den Empfang der ersten Benachrichtigungsnachricht und der Uplink- und Downlink-Datenpakete meldet; und
Senden der ersten Anforderungsnachricht zu dem Benutzerebenen-Netzelement (700, 710) nach dem Empfang der zweiten Benachrichtigungsnachricht.

10. Steuerebenen-Netzelement (600, 610) nach Anspruch 8 oder 9, wobei die erste Anforderungsnachricht eine Paketabgleichregel umfasst, wobei die Paketabgleichregel verwendet wird, um das Benutzerebenen-Netzelement (700, 710) anzuweisen, das erste Datenpaket aus empfangenen Uplink- und Downlink-Datenpaketen gemäß der Paketabgleichregel zu bestimmen, und die Uplink- und Downlink-Datenpakete ein Uplink-Datenpaket und/oder ein Downlink-Datenpaket umfassen.

11. Steuerebenen-Netzelement (600, 610) nach einem der Ansprüche 8 bis 10, wobei das Verarbeitungsmodul ferner ausgelegt ist zum Weiterleiten des ersten Datenpakets an das Benutzerebenen-Netzelement (700, 710) und/oder ein anderes Steuerebenen-Netzelement (600, 610) unter Verwendung des Kommunikationsmoduls.

12. Datenpaketverarbeitungssystem, das das Steuerebenen-Netzelement (600, 610) nach einem der Ansprüche 8 bis 11 und ein Benutzerebenen-Netzelement (700, 710) umfasst, wobei das Benutzerebenen-Netzelement (700, 710) umfasst: ein Verarbeitungsmodul und ein Kommunikationsmodul, wobei
das Verarbeitungsmodul (702) ausgelegt ist zum Empfangen einer ersten Anforderungsnachricht von einem Steuerebenen-Netzelement (600, 610) unter Verwendung des Kommunikationsmoduls, wobei die erste Anforderungsnachricht verwendet wird, um den Aufbau eines ersten Benutzerebenenkanals zwischen dem Steuerebenen-Netzelement (600, 610) und dem Benutzerebenen-Netzelement (700, 710) anzufordern, und die erste Anforderungsnachricht eine steuerebenenseitige Endpunktkennung des ersten Benutzerebenenkanals umfasst;
das Verarbeitungsmodul ferner ausgelegt ist zum Senden, basierend auf der ersten Anforderungsnachricht, einer ersten Antwortnachricht zu dem Steuerebenen-Netzelement (600, 610) unter Verwendung des Kommunikationsmoduls, wobei die erste Antwortnachricht verwendet wird, um anzugeben, dass der erste Benutzerebenenkanal erfolgreich aufgebaut ist; und
das Verarbeitungsmodul ferner ausgelegt ist zum Senden, über den ersten Benutzerebenenkanal, eines ersten Datenpakets zu dem Steuerebenen-Netzelement (600, 610) unter Verwendung des Kommunikationsmoduls, wobei das Steuerebenen-Netzelement (600, 610) und das Benutzerebenen-Netzelement (700, 710) Netzelemente sind, die ein Zielbenutzergerät bedienen, wobei das Steuerebenen-Netzelement (600, 610) und das Benutzerebenen-Netzelement (700, 710) eines selben Kernnetzelements getrennt sind, wobei das Verarbeitungsmodul (702) ausgelegt ist zum Empfangen der ersten Anforderungsnachricht von dem Steuerebenen-Netzelement (600, 610), wenn sich das Zielbenutzergerät in einem Ruhezustand befindet.

13. Datenpaketverarbeitungssystem nach Anspruch 12, wobei die erste Anforderungsnachricht eine Paketabgleichregel umfasst; und
das Verarbeitungsmodul spezifisch ausgelegt ist zum: Bestimmen des ersten Datenpakets aus empfangenen Uplink- und Downlink-Datenpaketen gemäß der Paketabgleichregel, wobei die Uplink- und Downlink-Datenpakete ein Uplink-Datenpaket und/oder ein Downlink-Datenpaket umfassen; und Senden, über den ersten Benutzerebenenkanal, des ersten Datenpakets zu dem Steuerebenen-Netzelement (600, 610) unter Verwendung des Kommunikationsmoduls.

14. Datenpaketverarbeitungssystem nach Anspruch 12 oder 13, wobei die erste Anforderungsnachricht ferner eine Paketverarbeitungsregel umfasst; und
das Verarbeitungsmodul ferner ausgelegt ist zum Hinzufügen von Identifikationsinformationen eines zweiten Benutzerebenenkanals zu dem ersten Datenpaket basierend auf der Paketverarbeitungsregel, wobei die Identifikationsinformationen des zweiten Benutzerebenenkanals mindestens eines von einer Endpunktkennung des zweiten Benutzerebenenkanals, einer Kennung des Zielbenutzergeräts, einer Dienstkennung, einer Paketprioritätskennung, der Paketabgleichregel und der Paketverarbeitungsregel umfassen.

## Revendications

1. Procédé de traitement de paquets de données, comprenant :
l'envoi (301), par un élément de réseau de plan de contrôle (600, 610), d'un premier message de demande à un élément de réseau de plan d'utilisateur (700, 710), dans lequel le premier message de demande est utilisé pour demander d'établir un premier canal de plan d'utilisateur entre l'élément de réseau de plan de contrôle (600, 610) et l'élément de réseau de plan d'utilisateur (700, 710), et le premier message de demande comprend un identifiant de point d'extrémité côté plan de contrôle du premier canal de plan d'utilisateur ;
la réception (302), par l'élément de réseau de plan de contrôle (600, 610), d'un premier message de réponse en provenance de l'élément de réseau de plan d'utilisateur (700, 710), dans lequel le premier message de réponse est utilisé pour indiquer que le premier canal de plan d'utilisateur est établi avec succès ; et
la réception (303), par l'élément de réseau de plan de contrôle (600, 610) par le biais du premier canal de plan d'utilisateur, d'un premier paquet de données envoyé par l'élément de réseau de plan d'utilisateur (700, 710), dans lequel l'élément de réseau de plan de contrôle (600, 610) et l'élément de réseau de plan d'utilisateur (700, 710) sont des éléments de réseau desservant un équipement utilisateur cible, l'élément de réseau de plan de contrôle (600, 610) et l'élément de réseau de plan d'utilisateur (700, 710) d'un même élément de réseau central sont séparés, et
dans lequel le procédé est **caractérisé en ce que** l'envoi (301), par un élément de réseau de plan de contrôle (600, 610), du premier message de demande à un élément de réseau de plan d'utilisateur (700, 710) comprend :
l'envoi (402), par l'élément de réseau de plan de contrôle (600, 610), du premier message de demande à l'élément de réseau de plan d'utilisateur (700, 710) lorsque l'élément de réseau de plan de contrôle (600, 610) détermine que l'équipement utilisateur cible est dans un mode inactif.

2. Procédé selon la revendication 1, dans lequel l'envoi, par l'élément de réseau de plan de contrôle, du premier message de demande à l'élément de réseau de plan d'utilisateur (700, 710) comprend :
l'envoi, par l'élément de réseau de plan de contrôle (600, 610), d'un premier message de notification à l'élément de réseau de plan d'utilisateur (700, 710) lors de la détermination que l'équipement utilisateur cible est dans le mode inactif, dans lequel le premier message de notification est utilisé pour donner à l'élément de réseau de plan d'utilisateur (700, 710) l'instruction d'envoyer un second message de notification à l'élément de réseau de plan de contrôle (600, 610) lorsque l'élément de réseau de plan d'utilisateur (700, 710) reçoit un paquet de données en liaison montante et un paquet de données en liaison descendante, et
le second message de notification est utilisé par l'élément de réseau de plan d'utilisateur (700, 710) pour notifier à l'élément de réseau de plan de contrôle (600, 610) que les paquets de données en liaison montante et liaison descendante ont été reçus ;
la réception, par l'élément de réseau de plan de contrôle (600, 610), du second message de notification en provenance de l'élément de réseau de plan d'utilisateur (700, 710) notifiant la réception du premier message de notification et des paquets de données en liaison montante et liaison descendante ; et
l'envoi, par l'élément de réseau de plan de contrôle (600, 610), du premier message de demande à l'élément de réseau de plan d'utilisateur (700, 710) après la réception du second message de notification.

3. Procédé selon la revendication 1 ou 2, dans lequel le premier message de demande comprend une règle de correspondance de paquets, la règle de correspondance de paquets est utilisée pour donner à l'élément de réseau de plan d'utilisateur (700, 710) l'instruction de déterminer le premier paquet de données à partir de paquets de données en liaison montante et liaison descendante reçus conformément à la règle de correspondance de paquets, et les paquets de données en liaison montante et liaison descendante comprennent un paquet de données en liaison montante et/ou un paquet de données en liaison descendante.

4. Procédé selon l'une quelconque des revendications 1 à 3, le procédé comprenant en outre :
la retransmission, par l'élément de réseau de plan de contrôle (600, 610), du premier paquet de données vers l'élément de réseau de plan d'utilisateur (700, 710) et/ou un autre élément de réseau de plan de contrôle (600, 610).

5. Procédé de traitement de paquets de données, comprenant :
l'envoi (301), par un élément de réseau de plan de contrôle (600, 610), d'un premier message de demande à un élément de réseau de plan d'utilisateur (700, 710) ;
la réception (301), par l'élément de réseau de plan d'utilisateur (700, 710), du premier message de demande en provenance de l'élément de réseau de plan de contrôle (600, 610), dans lequel le premier message de demande est utilisé pour demander d'établir un premier canal de plan d'utilisateur entre l'élément de réseau de plan de contrôle (600, 610) et l'élément de réseau de plan d'utilisateur (700, 710), et le premier message de demande comprend un identifiant de point d'extrémité côté plan de contrôle du premier canal de plan d'utilisateur ;
l'envoi (302), par l'élément de réseau de plan d'utilisateur (700, 710), d'un premier message de réponse à l'élément de réseau de plan de contrôle (600, 610) sur la base du premier message de demande, dans lequel le premier message de réponse est utilisé pour indiquer que le premier canal de plan d'utilisateur est établi avec succès ; et
l'envoi (303), par l'élément de réseau de plan d'utilisateur (700, 710), d'un premier paquet de données à l'élément de réseau de plan de contrôle (600, 610) par le biais du premier canal de plan d'utilisateur, dans lequel
l'élément de réseau de plan de contrôle (600, 610) et l'élément de réseau de plan d'utilisateur (700, 710) sont des éléments de réseau desservant un équipement utilisateur cible, l'élément de réseau de plan de contrôle (600, 610) et l'élément de réseau de plan d'utilisateur (700, 710) d'un même élément de réseau central sont séparés, et
le procédé est **caractérisé en ce que** l'envoi (301), par un élément de réseau de plan de contrôle (600, 610), du premier message de demande à un élément de réseau de plan d'utilisateur (700, 710) comprend :
l'envoi (402), par l'élément de réseau de plan de contrôle (600, 610), du premier message de demande à l'élément de réseau de plan d'utilisateur (700, 710) lorsque l'élément de réseau de plan de contrôle (600, 610) détermine que l'équipement utilisateur cible est dans un mode inactif.

6. Procédé selon la revendication 5, dans lequel le premier message de demande comprend une règle de correspondance de paquets ; et
l'envoi, par l'élément de réseau de plan d'utilisateur (700, 710), d'un premier paquet de données à l'élément de réseau de plan de contrôle (600, 610) par le biais du premier canal de plan d'utilisateur comprend :
la détermination, par l'élément de réseau de plan d'utilisateur (700, 710), du premier paquet de données à partir de paquets de données en liaison montante et liaison descendante reçus, conformément à la règle de correspondance de paquets, dans lequel les paquets de données en liaison montante et liaison descendante comprennent un paquet de données en liaison montante et/ou un paquet de données en liaison descendante ; et
l'envoi, par l'élément de réseau de plan d'utilisateur (700, 710), du premier paquet de données à l'élément de réseau de plan de contrôle (600, 610) par le biais du premier canal de plan d'utilisateur.

7. Procédé selon la revendication 5 ou 6, dans lequel le premier message de demande comprend en outre une règle de traitement de paquets ; et
le procédé comprend en outre :
l'ajout, par l'élément de réseau de plan d'utilisateur (700, 710), d'informations d'identification d'un second canal de plan d'utilisateur au premier paquet de données sur la base de la règle de traitement de paquets, dans lequel les informations d'identification du second canal de plan d'utilisateur comprennent au moins un parmi un identifiant de point d'extrémité du second canal de plan d'utilisateur, un identifiant de l'équipement utilisateur cible, un identifiant de service, un identifiant de priorité de paquet, la règle de correspondance de paquets et la règle de traitement de paquets.

8. Élément de réseau de plan de contrôle (600, 610), comprenant : un module de traitement et un module de communication, dans lequel
le module de traitement (602) est configuré pour envoyer un premier message de demande à un élément de réseau de plan d'utilisateur (700, 710) à l'aide du module de communication, dans lequel le premier message de demande est utilisé pour demander d'établir un premier canal de plan d'utilisateur entre l'élément de réseau de plan de contrôle (600, 610) et l'élément de réseau de plan d'utilisateur (700, 710), et le premier message de demande comprend un identifiant de point d'extrémité côté plan de contrôle du premier canal de plan d'utilisateur ;
le module de traitement (602) est en outre configuré pour recevoir un premier message de réponse en provenance de l'élément de réseau de plan d'utilisateur (700, 710) à l'aide du module de communication, dans lequel le premier message de réponse est utilisé pour indiquer que le premier canal de plan d'utilisateur est établi avec succès ; et
le module de traitement (602) est en outre configuré pour recevoir, par le biais du premier canal de plan d'utilisateur à l'aide du module de communication, un premier paquet de données envoyé par l'élément de réseau de plan d'utilisateur (700, 710), dans lequel
l'élément de réseau de plan de contrôle (600, 610) et l'élément de réseau de plan d'utilisateur (700, 710) sont des éléments de réseau desservant un équipement utilisateur cible, l'élément de réseau de plan de contrôle (600, 610) et l'élément de réseau de plan d'utilisateur (700, 710) d'un même élément de réseau central sont séparés,
dans lequel l'élément de réseau de plan de contrôle est **caractérisé en ce que** le module de traitement (602) est configuré pour : lors de la détermination que l'équipement utilisateur cible est dans un mode inactif, envoyer le premier message de demande à l'élément de réseau de plan d'utilisateur (700, 710) à l'aide du module de communication.

9. Élément de réseau de plan de contrôle (600, 610) selon la revendication 8, dans lequel le module de traitement (602) est configuré pour, lors de la détermination que l'équipement utilisateur cible est dans un mode inactif, envoyer le premier message de demande comprenant le module de traitement étant configuré pour :
envoyer un premier message de notification à l'élément de réseau de plan d'utilisateur (700, 710) lors de la détermination que l'équipement utilisateur cible est dans le mode inactif, dans lequel
le premier message de notification est utilisé pour donner à l'élément de réseau de plan d'utilisateur (700, 710) l'instruction d'envoyer un second message de notification à l'élément de réseau de plan de contrôle (600, 610) lorsque l'élément de réseau de plan d'utilisateur (700, 710) reçoit un paquet de données en liaison montante et un paquet de données en liaison descendante, et
le second message de notification est utilisé par l'élément de réseau de plan d'utilisateur (700, 710) pour notifier à l'élément de réseau de plan de contrôle (600, 610) que les paquets de données en liaison montante et liaison descendante ont été reçus ;
recevoir le second message de notification en provenance de l'élément de réseau de plan d'utilisateur (700, 710) notifiant la réception du premier message de notification et des paquets de données en liaison montante et liaison descendante ; et
envoyer le premier message de demande à l'élément de réseau de plan d'utilisateur (700, 710) après la réception du second message de notification.

10. Élément de réseau de plan de contrôle (600, 610) selon la revendication 8 ou 9, dans lequel le premier message de demande comprend une règle de correspondance de paquets, la règle de correspondance de paquets est utilisée pour donner à l'élément de réseau de plan d'utilisateur (700, 710) l'instruction de déterminer le premier paquet de données à partir de paquets de données en liaison montante et liaison descendante reçus conformément à la règle de correspondance de paquets, et les paquets de données en liaison montante et liaison descendante comprennent un paquet de données en liaison montante et/ou un paquet de données en liaison descendante.

11. Élément de réseau de plan de contrôle (600, 610) selon l'une quelconque des revendications 8 à 10, dans lequel le module de traitement est en outre configuré pour retransmettre le premier paquet de données vers l'élément de réseau de plan d'utilisateur (700, 710) et/ou un autre élément de réseau de plan de contrôle (600, 610) à l'aide du module de communication.

12. Système de traitement de paquets de données comprenant l'élément de réseau de plan de contrôle (600, 610) selon l'une quelconque des revendications 8 à 11 et un élément de réseau de plan d'utilisateur (700, 710), l'élément de réseau de plan d'utilisateur (700, 710) comprenant : un module de traitement et un module de communication, dans lequel
le module de traitement (702) est configuré pour recevoir un premier message de demande en provenance d'un élément de réseau de plan de contrôle (600, 610) à l'aide du module de communication, dans lequel le premier message de demande est utilisé pour demander d'établir un premier canal de plan d'utilisateur entre l'élément de réseau de plan de contrôle (600, 610) et l'élément de réseau de plan d'utilisateur (700, 710), et le premier message de demande comprend un identifiant de point d'extrémité côté plan de contrôle du premier canal de plan d'utilisateur ;
le module de traitement est en outre configuré pour envoyer, en fonction du premier message de demande, un premier message de réponse à l'élément de réseau de plan de contrôle (600, 610) à l'aide du module de communication, dans lequel le premier message de réponse est utilisé pour indiquer que le premier canal de plan d'utilisateur est établi avec succès ; et
le module de traitement est en outre configuré pour envoyer, par le biais du premier canal de plan d'utilisateur, un premier paquet de données à l'élément de réseau de plan de contrôle (600, 610) à l'aide du module de communication, dans lequel l'élément de réseau de plan de contrôle (600, 610) et l'élément de réseau de plan d'utilisateur (700, 710) sont des éléments de réseau desservant un équipement utilisateur cible, l'élément de réseau de plan de contrôle (600, 610) et l'élément de réseau de plan d'utilisateur (700, 710) d'un même élément de réseau central sont séparés, dans lequel le module de traitement (702) est configuré pour recevoir le premier message de demande en provenance de l' élément de réseau de plan de contrôle (600, 610) lorsque l'équipement utilisateur cible est dans un mode inactif.

13. Système de traitement de paquets de données selon la revendication 12, dans lequel le premier message de demande comprend une règle de correspondance de paquets ; et le module de traitement est plus particulièrement configuré pour : déterminer le premier paquet de données à partir de paquets de données en liaison montante et liaison descendante reçus conformément à la règle de correspondance de paquets, dans lequel les paquets de données en liaison montante et liaison descendante comprennent un paquet de données en liaison montante et/ou un paquet de données en liaison descendante ; et envoyer, par le biais du premier canal de plan d'utilisateur, le premier paquet de données à l'élément de réseau de plan de contrôle (600, 610) à l'aide du module de communication.

14. Système de traitement de paquets de données selon la revendication 12 ou 13, dans lequel le premier message de demande comprend en outre une règle de traitement de paquets ; et
le module de traitement est en outre configuré pour ajouter des informations d'identification d'un second canal de plan d'utilisateur au premier paquet de données sur la base de la règle de traitement de paquets, dans lequel les informations d'identification du second canal de plan d'utilisateur comprennent au moins un parmi un identifiant de point d'extrémité du second canal de plan d'utilisateur, un identifiant de l'équipement utilisateur cible, un identifiant de service, un identifiant de priorité de paquet, la règle de correspondance de paquets et la règle de traitement de paquets.
